(19) Europäisches Patentamt / European Patent Office / Office européen des brevets

(11) **EP 2 101 158 B1**

(12) **EUROPÄISCHE PATENTSCHRIFT**

(45) Veröffentlichungstag und Bekanntmachung des Hinweises auf die Patenterteilung:
**22.10.2014 Patentblatt 2014/43**

(51) Int Cl.:
*G01D 5/244* *(2006.01)*   *G01D 18/00* *(2006.01)*

(21) Anmeldenummer: **08105865.3**

(22) Anmeldetag: **25.11.2008**

(54) **Verfahren und Vorrichtungen zur Überwachung und Überprüfung einer Messeinrichtung**

Method and devices for monitoring and testing a measuring device

Procédé et dispositifs de surveillance et de contrôle d'un dispositif de mesure

(84) Benannte Vertragsstaaten:
**CZ DE FR IT**

(30) Priorität: **12.03.2008 DE 102008000630**

(43) Veröffentlichungstag der Anmeldung:
**16.09.2009 Patentblatt 2009/38**

(73) Patentinhaber: **ROBERT BOSCH GMBH**
**70442 Stuttgart (DE)**

(72) Erfinder:
• **Grossmann, Alex**
**71229, Leonberg (DE)**

• **Kazmierczak, Harald**
**71717 Beilstein (DE)**
• **Baumann, Torsten**
**75031 Eppingen-Adelshofen (DE)**
• **Klotzbuecher, Thomas**
**73635 Rudersberg (DE)**

(56) Entgegenhaltungen:
WO-A1-2007/123522   DE-A1- 4 122 635
DE-A1- 10 244 547   DE-A1- 19 625 016
DE-U1- 29 505 426   US-B1- 7 031 031

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die Erfindung betrifft Verfahren und Vorrichtungen zur Überwachung und Überprüfung einer Messeinrichtung zur berührungslosen Erfassung der relativen Position zwischen einem ersten Element und einem zweiten Element mit Hilfe eines Positionssensors, gemäß Anspruch 1 und Anspruch 2 sowie gemäß Anspruch 8 und Anspruch 9.

Verfahren bzw. Messeinrichtungen zur berührungslosen Erfassung der relativen Position zwischen einem ersten Element und einem zweiten Element mit Hilfe eines Positionssensors sind in verschiedenen Systemen des Fahrzeugbereichs verwendbar, in denen lineare Wege oder Drehwinkel gemessen werden müssen, wie beispielsweise in einem Drosselklappengeber, in einem Gaspedalwertgeber, in einem Pedalmodul, in einem Karosserieeinfederungsgeber, einem Winkelaufnehmer eines Scheibenwischerantriebs oder in einem Gasdrehgriff eines Motorrads.

Das Messprinzip solcher Messeinrichtungen basiert beispielsweise darauf, dass wenigstens eine elektrische Spule mit mindestens einem Kondensator sowie gegebenenfalls weiteren Bauelementen einen Schwingkreis bildet, wobei sich die Eigenfrequenz des Schwingkreises abhängig von der relativen Drehlage bzw. abhängig von der relativen Linearbewegung des Beeinflussungselements in Bezug zur Spule bzw. zu dem Kondensator ändert. Eine Auswerteeinrichtung berechnet dann aus der jeweils gemessenen Eigenfrequenz des Schwingkreises eine Drehwinkellage bzw. eine linear zurück gelegte Wegstrecke des Beeinflussungselements in Bezug zur Spul bzw. zum Kondensator.

Im einzelnen erzeugt dabei die Spule eines solchen Schwingreises ein elektromagnetisches Wechselfeld, das in dem Beeinflussungselement nach dem Induktionsgesetz zunächst eine Spannung induziert. Die induzierte Spannung führt zu einem Stromfluss in dem Beeinflussungselement. Dieser Stromfluss im Beeinflussungselement hat seinerseits ein elektromagnetisches Wechselfeld zur Folge, das sich dem durch die Spule erzeugten Wechselfeld überlagert und in einer Änderung der Induktivität der Spule und somit in einer messbaren Änderung der Eigenfrequenz des Schwingkreises resultiert. In diesem Fall liegt ein induktiver Weg- oder Winkelsensor vor.

Denkbar ist auch, dass sich durch eine Relativbewegung zwischen dem Beeinflussungselement und dem Schwingkreis die Kapazität des dem Schwingkreis zugeordneten Kondensators und damit wiederum die Eigenfrequenz des Schwingkreises oder Oszillators verändert. Dann liegt ein kapazitiver Weg- oder Winkelaufnehmer vor.

Eine solche Messeinrichtung bzw. ein solches Verfahren ist aus der DE 103 52 351 A1 bekannt, wobei zur Messung eines Drehwinkels des Beeinflussungselements mehrere Spulen kreisförmig angeordnet sind und mittels eines Umschalters die einzelnen Spulen zeitlich nacheinander mit einem Kondensator verbunden werden und die Impedanz der durch den Umschalter ausgewählten Spule durch eine Auswerteeinrichtung in Abhängigkeit von der Position des Beeinflussungselements relativ zur betreffenden Spule gemessen wird, wobei die vorgenannten Schritte so oft wiederholt werden, bis durch den Umschalter alle Spulen nacheinander angewählt, d.h. nacheinander mit dem Kondensator verbunden worden sind und die Impedanz aller Spulen gemessen worden ist. Ein beispielsweise durch Achsspiel bewirktes Verkippen des Beeinflussungselements in Bezug zu einer Ebene senkrecht zur Drehachse resultiert dann in einer Änderung der Position des Beeinflussungselements im Magnetfeld der betreffenden, durch den Umschalter gerade gewählten Spule, was wiederum ein verändertes Messergebnis hervorruft, weil sich dadurch die Eigenfrequenz des der Spule zugeordneten Schwingkreises ändert, obwohl sich die Drehlage des Beeinflussungselements nicht verändert hat. Somit wirkt sich das Verkippen des Beeinflussungselements in Bezug zu einer Ebene senkrecht zur Drehachse auf das Messergebnis aus, was eine gewissen Nachteil darstellt.

Weiterhin werden bei Anwendungen solcher Messeinrichtungen in Kraftfahrzeugen vom Gesetzgeber Redundanzen gefordert, insbesondere bei Weg- und Winkelsensoren in Gaspedalen, Drosselklappen sowie in ABS- (Antiblockier-), ESP- (Elektronische Stabilitätsregelung) Systemen. In der Regel sind daher elektronische und mechanische Komponenten wie die Sensoren und die deren Signale auswertenden Auswerteeinrichtungen solcher Messeinrichtungen redundant aufgebaut. Bekannt sind auch Messeinrichtungen, bei welchen aus Kostengründen nicht alle Komponenten redundant ausgeführt sind. Beispielsweise können in einer Messeinrichtung zwei nach dem gleichen physikalischen Prinzip arbeitende Sensoren, zwei die jeweilige Auswerteeinrichtung bildende Mikrochips, jedoch nur eine gemeinsame Spannungsversorgung verwendet werden. Ein solcher Aufbau resultiert dennoch in einem höheren Fertigungs- und Montageaufwand, weil wenigstens einige der Komponenten einer solchen Messeinrichtung zur Bildung von Redundanzen mehrfach vorhanden sind.

Offenbarung der Erfindung

Die Erfindung stellt Verfahren sowie Vorrichtungen zur Überwachung und Überprüfung einer Messeinrichtung zur berührungslosen Erfassung der relativen Position zwischen einem ersten Element und einem zweiten Element mit Hilfe eines Positionssensors vor, der wenigstens vier bzw. sechs, mit dem ersten Element oder mit dem zweiten Element verbundene Oszillatoren sowie wenigstens ein Ausgangssignale der Oszillatoren beeinflussendes, mit dem zweiten Element oder mit dem ersten Element verbundenes Beeinflussungselement aufweist.

Gemäß einer ersten Alternative ist das Verfahren durch folgende Schritte gekennzeichnet:

a) Überprüfen der von den Oszillatoren ausgesteuerten Ausgangssignale anhand wenigstens eines Prüfkriteriums, und

b) falls die Ausgangssignale aller Oszillatoren das wenigstens eine Prüfkriterium erfüllen, dann Ermitteln der relativen Position zwischen dem ersten Element und dem zweiten Element auf der Basis des Ausgangssignals wenigstens eines Oszillators, oder

c) falls wenigstens einer der Oszillatoren ein Ausgangssignal aussteuert, welches das wenigstens eine Prüfkriterium nicht erfüllt, dann Bilden von wenigstens zwei Gruppen von Oszillatoren aus der Gesamtheit von Oszillatoren, wobei keiner der Oszillatoren gleichzeitig Mitglied in mehreren Gruppen von Oszillatoren ist, und

c1) falls das Ausgangssignal wenigstens eines Oszillators wenigstens einer Gruppe von Oszillatoren das wenigstens eine Prüfkriterium nicht erfüllt und die Ausgangssignale aller Oszillatoren wenigstens einer weiteren Gruppe von Oszillatoren das wenigstens eine Prüfkriterium allesamt erfüllen, dann Ermitteln der relativen Position zwischen dem ersten Körper und dem zweiten Körper auf der Basis des Ausgangssignals wenigstens eines Oszillators der wenigstens einen weiteren Gruppe von Oszillatoren, oder

c2) falls in jeder Gruppe von Oszillatoren wenigstens ein Oszillator vorhanden ist, dessen Ausgangssignal das wenigstens eine Prüfkriterium nicht erfüllt, dann Aussteuern eines Störungssignals.

Gemäß einer weiteren Alternative wird ein Verfahren vorgeschlagen, dass wenigstens die folgenden Schritte beinhaltet:

a) Überprüfen der von den Oszillatoren ausgesteuerten Ausgangssignale anhand wenigstens eines Prüfkriteriums, und

b) falls die Ausgangssignale aller Oszillatoren das wenigstens eine Prüfkriterium erfüllen, dann Ermitteln der relativen Position zwischen dem ersten Element und dem zweiten Element auf der Basis der Ausgangssignale wenigstens eines Oszillators, oder

c) falls einer der Oszillatoren Ausgangssignale aussteuert, welche das wenigstens eine Prüfkriterium nicht erfüllen, dann Ermitteln der relativen Position zwischen dem ersten Element und dem zweiten Element auf der Basis der Ausgangssignale wenigstens eines Oszillators der verbleibenden Oszillatoren, oder

d) falls zwei der Oszillatoren Ausgangssignale aussteuern, welche jeweils das wenigstens eine Prüfkriterium nicht erfüllen, dann Ermitteln der relativen Position zwischen dem ersten Element und dem zweiten Element auf der Basis der Ausgangssignale wenigstens eines Oszillators der verbleibenden Oszillatoren,

e) falls mehr als zwei der Oszillatoren Ausgangssignale aussteuern, welche jeweils das wenigstens eine Prüfkriterium nicht erfüllen, dann Erzeugen eines Störungssignals.

Die Erfindung basiert daher auf dem Gedanken, die bei Messeinrichtungen aus anderen als aus Gründen der Überwachung oder Redundanz ohnehin mehrfach vorhandenen elektronischen Schwingkreise oder Oszillatoren dazu zu nutzen, deren Ausgangssignale anhand des wenigstens einen Prüfkriteriums zu überwachen und zu überprüfen. Damit besitzen die Oszillatoren eine Doppelfunktion, indem sie durch Vorhandensein ihrer Mehrzahl zum einen für die Bildung des Messergebnisses dienen und zum andern eine gegenseitige Überwachung bzw. Überprüfung erlauben. Im Ergebnis werden dann nur die Ausgangssignale der Oszillatoren zur Bildung des Messergebnisses herangezogen, welche sich anhand der Überprüfung als funktionstüchtig erwiesen haben. Mithin sind in der Messeinrichtung keine zusätzlichen Oszillatoren notwendig, um redundante Ausgangssignale zu erzeugen. Mit Hilfe der Erfindung ergibt sich daher eine kostengünstige Messeinrichtung, welche ohne zusätzliche Bauelemente überwacht werden kann und welche bereits Sicherheitsebenen aufgrund der erfindungsgemäßen Verfahren beinhaltet.

Für den Fall einer Messeinrichtung in Form eines induktiven Drehwinkelgebers sind beispielsweise wenigstens vier bzw. sechs Oszillatoren als Stator vorhanden, wobei vorzugsweise eine gerade Anzahl von wenigstens vier bzw. sechs, mit Spulenachsen parallel zu einer Drehachse kreisförmig um die Drehachse angeordneten Spulen vorgesehen ist, von welchen jeweils zwei Spulen miteinander elektrisch gekoppelt sind und jeweils ein ein separates Ausgangssignal für eine Auswerteeinrichtung lieferndes Spulenpaar bilden, wobei die Spulen eines Spulenpaares in Bezug auf die Drehachse diametral gegenüberliegend angeordnet sind. Jedes Spulenpaar bildet dann vorzugsweise zusammen mit wenigstens einem Kondensator einen Schwingkreis, anhand dessen Frequenz die Auswerteeinrichtung die relative Drehposition zwischen dem Stator und dem Beeinflussungselement als Rotor bestimmt. Das Vorsehen von wenigstens vier bzw. sechs Oszillatoren hat zunächst den Zweck, dass ein Verkippen des Rotors oder des Stators des Drehwinkelgebers in eine von einer parallelen Lage abweichenden Lage eine Signalveränderung in der einen Spule eines Spulenpaars auslöst, welche durch die Signalveränderung in der anderen Spule des Spulenpaars kompensiert wird, so dass ein solches Verkippen keine Auswirkungen auf das Messergebnis hat. Ein solcher induktiver Drehwinkelgeber ist daher robust und eignet sich daher besonders für den Einsatz in Fahrzeugen, in denen es aufgrund von Schwingungen und äußerer Krafteinwirkung nicht vermieden werden kann, dass Kräfte auf einen oder beide Körper einwirken, welche zu Achsfehlern bzw. zum Verkippen des Rotors oder Stators führen, wie dies beispielsweise bei Fußpedalen in Kraftfahrzeugen oder bei Gasdrehgriffen von Motorrädern der Fall ist, wo dem Drehmoment um die Drehachse zusätzlich oft ein von den Betätigungskräften herrührendes Biegemoment überlagert ist.

Entscheidend für die vorliegende Erfindung ist jedoch, dass durch das Vorsehen von wenigstens vier bzw. sechs Oszillatoren zur Vermeidung von aus Kippvorgängen oder Achsfehleren resultierenden Messfehlern das erfindungsgemäße Verfahren möglich ist, welches die mehrfach vorhandenen Oszillatoren für die Überprüfung, Überwachung und Redundanzen nutzt.

Durch die in den Unteransprüchen aufgeführten Maßnahmen sind vorteilhafte Weiterbildungen und Verbesserungen der in den unabhängigen Patentansprüchen angegebenen Erfindung möglich.

Gemäß einer bevorzugten Ausführungsform der erfindungsgemäßen Vorrichtungen sind das erste Element und das zweite Element einer Stelleinrichtung eines Kraftfahrzeugs wie einem Gaspedal oder einer Drosselklappe zugeordnet. Dann ist das Störungssignal gemäß Schritt c2) von Anspruch 1 und Schritt e) von Anspruch 2 beispielsweise ein an eine Steuerung der Stelleinrichtung des Fahrzeugs ausgesteuertes Notlaufsignal. Im Falle eines Drehwinkelgebers eines Gaspedals wird beispielsweise durch das Störungssignal eine Notlauffunktion eines Motorsteuergeräts des Kraftfahrzeugs ausgelöst, weil dann kein korrektes Messsignal mehr vom Drehwinkelgeber des Gaspedals erzeugt wird.

Gemäß Schritt c1) von Anspruch 1 und Schritt d) von Anspruch 2, wenn also noch genügend Oszillatoren zur korrekten Bildung des Messergebnisses vorhanden sind, kann beispielsweise zusätzlich ein optisches und/oder akustisches Warnsignal in einer Warneinrichtung erzeugt werden, das auf den oder die gestörten Oszillatoren hinweist. Das Warnsignal könnte auch in einem nicht flüchtigen Speicher gespeichert und anlässlich einer routinemäßigen Wartung ausgelesen werden.

Besonders bevorzugt ist das Prüfkriterium ein Plausibilitätskriterium, bei welchem geprüft wird, ob das Ausgangssignal des betreffenden Oszillators innerhalb eines vorgegebenen Toleranzbereichs liegt.

Besonders bevorzugt werden die Ausgangssignale eines Oszillators abhängig von einer Eigenfrequenz des Oszillators gebildet, wobei die Lage des Beeinflussungselements die Induktivität wenigstens einer Spule und/oder die Kapazität wenigstens eines Kondensators dieses Oszillators beeinflusst.

Beispielsweise ist das Beeinflussungselement plattenförmig ausgebildet und bildet den Rotor, der relativ zu der wenigstens einen, den Stator bildenden Trägerplatte um die Drehachse in einer parallelen Ebene verdrehbar ist. Dann ist die Stromversorgung der auf dem Stator befindlichen Spulen besonders einfach.

Nicht zuletzt ist das Beeinflussungselement vorzugsweise wenigstens teilweise aus einem paramagnetischen und/oder aus einem diamagnetischen Material wie beispielsweise Kupfer gefertigt. Dann wird die bei ferromagnetischen Materialien auftretende induktive Kopplung vermieden, wobei bei einer größer werdenden Überdeckung des Beeinflussungselements mit der jeweiligen Spule die Induktivität der Spule reduziert und sich demzufolge die Eigenfrequenz des betreffenden Schwingkreises erhöht.

Der genaue Aufbau der Vorrichtung sowie die Verfahrensschritte werden anhand der folgenden Beschreibung von Ausführungsbeispielen klar.

Zeichnung

Ausführungsbeispiele der Erfindung sind in der Zeichnung dargestellt und in der nachfolgenden Beschreibung näher erläutert. In der Zeichnung zeigt

Fig.1    einen schematischen Schaltplan einer Messeinrichtung gemäß einer bevorzugten Ausführungsform der Erfindung;

Fig.2    eine Draufsicht auf einen Positionssensor der Messeinrichtung von Fig.1;

Fig.3    eine Draufsicht auf eine Drahtwicklung einer Spule des Positionssensors von Fig.2;

Fig.4    eine Kennlinie des Positionssensors von Fig.2;

Fig.5    eine Draufsicht auf einen weiteren Positionssensor der Messeinrichtung gemäß einer weiteren Ausführungsform;

Fig.6    eine Kennlinie des Positionssensors von Fig.5;

Fig.7    ein Ablaufschema einer Variante des erfindungsgemäßen Verfahrens;

Fig.8   ein Ablaufschema einer weiteren Variante des erfindungsgemäßen Verfahrens.

Beschreibung der Ausführungsbeispiele

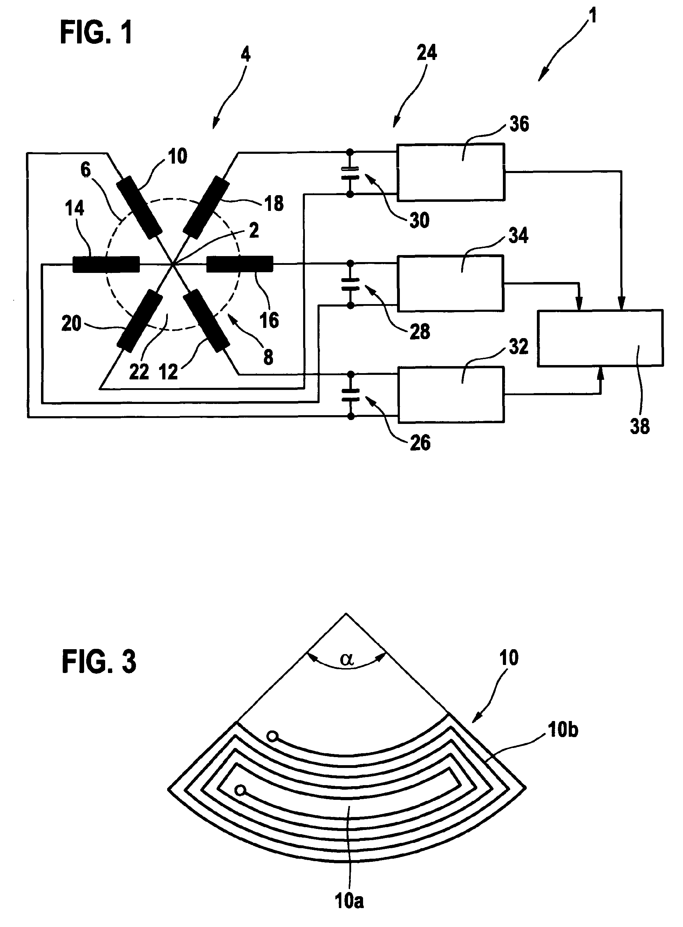

Das in Fig. 1 dargestellte bevorzugte Ausführungsbeispiel einer Messeinrichtung 1 zur berührungslosen Erfassung der relativen Position zwischen einem ersten Element und einem zweiten Element wird beispielsweise zur Messung des Betätigungswinkels eines aus Maßstabsgründen nicht gezeigten elektronischen Fahrpedals eines Fahrpedalmoduls verwendet. Darüber hinaus ist eine solche Messeinrichtung 1 in verschiedenen Systemen verwendbar, in denen Drehwinkel oder lineare Wege gemessen werden müssen, im Fahrzeugbereich beispielsweise in einem Drosselklappengeber, in einem Gaspedalwertgeber in einem Pedalmodul, in einem Karosserieeinfederungsgeber, in einem Winkelaufnehmer eines Scheibenwischerantriebs oder in einem Gasdrehgriff eines Motorrads.

Die Messeinrichtung 1 dient folglich bevorzugt zur berührungslosen Erfassung des relativen Drehwinkels zwischen einem ersten Element und einem zweiten Element in Bezug auf eine Drehachse 2 mit Hilfe eines Positionssensors 4. Der Positionssensor 4 beinhaltet allgemein wenigstens einen Rotor 6 und einen Stator 8, wobei wenigstens ein beispielsweise die Induktivität wenigstens einer mit dem Rotor 6 oder dem Stator 8 verbundenen Spule 10, 12, 14, 16, 18, 20 beeinflussendes, mit dem Stator 8 oder dem Rotor 6 verbundenes Beeinflussungselement 22 sowie eine Auswerteeinrichtung 24 vorgesehen sind.

Das vorzugsweise plattenförmige Beeinflussungselement 22 bildet dann beispielsweise den Rotor 6, der beispielsweise mit einem gegenüber einem stationären Lagerbock drehbar gelagerten Fahrpedal drehfest verbunden ist. Dann ist der Stator 8 mit dem Lagerbock des Fahrpedals verbunden. Der Stator 8 trägt vorzugsweise die um die Drehachse 2 koaxial kreisförmig angeordneten Spulen 10, 12, 14, 16, 18, 20.

Genauer sind eine gerade Anzahl von wenigstens vier, mit Spulenachsen 10a, 12a, 14a, 16a parallel zur Drehachse 2 kreisförmig um die Drehachse 2 angeordneten Spulen 10, 12, 14, 16 18, 20 vorgesehen, von welchen jeweils zwei Spulen 10, 12 bzw. 14, 16 bzw. 18, 20 miteinander elektrisch gekoppelt sind und jeweils ein ein separates Ausgangssignal für die Auswerteeinrichtung 24 lieferndes Spulenpaar 10, 12 bzw. 14, 16 bzw. 18, 20 bilden, wobei die Spulen 10, 12 bzw. 14, 16 bzw. 18, 20 eines Spulenpaares in Bezug auf die Drehachse 2 diametral gegenüberliegend angeordnet sind.

Das Messprinzip der Messeinrichtung 1 beruht darauf, dass jedes Spulenpaar 10, 12 bzw. 14, 16 bzw. 18, 20 der vorzugsweise sechs Spulen mit einem zugeordneten Kondensator 26, 28, 30 einen eigenen Schwingkreis oder Oszillator bildet, wobei sich die Eigenfrequenz des jeweiligen Schwingkreises abhängig von der relativen Drehposition des Beeinflussungselements 22 in Bezug zum betreffenden Spulenpaar 10, 12 bzw. 14, 16 bzw. 18, 20 ändert. Die Auswerteeinrichtung 24 berechnet dann aus der jeweils gemessenen Eigenfrequenz der Schwingkreise einen Drehwinkel $\beta$ des Beeinflussungselements 22 in Bezug zu den Spulen 10, 12 bzw. 14, 16 bzw. 18, 20. Im einzelnen erzeugen dabei die Spulen 10, 12 bzw. 14, 16 bzw. 18, 20 ein elektromagnetisches Wechselfeld, das in dem Beeinflussungselement 22 nach dem Induktionsgesetz eine Spannung induziert. Wenn ein vorzugsweise wenigstens teilweise aus einem dia- oder paramagnetischen Material bestehendes Beeinflussungselement 22 verwendet wird, beispielsweise ein Beeinflussungselement 22 aus Kupfer, führt die induzierte Spannung zu einem Stromfluss in dem Beeinflussungselement 22. Dieser Stromfluss im Beeinflussungselement 22 hat seinerseits ein elektromagnetisches Wechselfeld zur Folge, das den durch die Spulen 10, 12 bzw. 14, 16 bzw. 18, 20 erzeugten Wechselfeldern entgegengerichtet ist und in einer Verringerung der Induktivität der Spulen 10, 12 bzw. 14, 16 bzw. 18, 20 und somit in einer messbaren Vergrößerung der Eigenfrequenz der betreffenden Schwingkreise resultiert.

Die bevorzugte Auswertung einer Frequenzänderung erfolgt dadurch, dass beispielsweise jeder Schwingkreis einen eigenen Zähler 32, 34, 36 aufweist, welcher Bestandteil der Auswerteeinrichtung 24 ist. In die Zähler 32, 34, 36 sind jeweils invertierende Verstärker zur Ausbildung eines Oszillators integriert. Sie zählen die Anzahl N der Schwingungen des jeweiligen Schwingkreises innerhalb einer vorgegebenen Zeit und übermitteln diese an einen Mikrocomputer 38 als Teil der Auswerteeinrichtung 24, welche daraus den Drehwinkel $\beta$ des Beeinflussungselements 22 in Bezug zum Stator 8 errechnet.

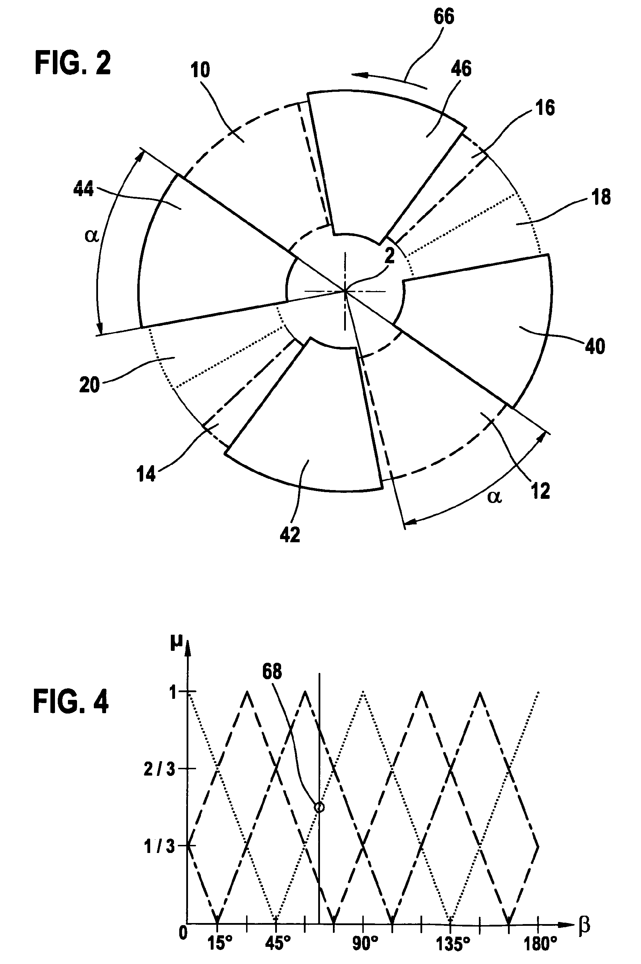

Wie aus Fig.2 hervorgeht, sind die Spulen 10, 12 bzw. 14, 16 bzw. 18, 20 in einer Ebene senkrecht zur jeweiligen Spulenachse gesehen kreissektorförmig ausgebildet, wobei jedoch ein zentraler Abschnitt jeweils ausgenommen ist. Die Spulen 10, 12 bzw. 14, 16 bzw. 18, 20 sind in Umfangsrichtung voneinander vorzugsweise äquidistant beabstandet angeordnet, hier bezogen auf die jeweilige das Zentrum der Spule bildenden Spulenachse vorzugsweise um jeweils 60 Grad zueinander versetzt, wobei sie beispielsweise den gleichen Zentriwinkel $\alpha$ aufweisen.

Das Beeinflussungselement 22 ist vorzugsweise plattenförmig ausgebildet und weist kreissektorförmige Abschnitte 40, 42, 44, 46, mit gegenüber den Spulen 10, 12 bzw. 14, 16 bzw. 18, 20 identischem Zentriwinkel $\alpha$ auf. Vorzugsweise ist die Anzahl der kreissektorförmigen Abschnitte 40, 42, 44, 46 um zwei geringer als die Anzahl der Spulen 10, 12 bzw. 14, 16 bzw. 18, 20. Die vier Abschnitte 40, 42, 44, 46 sind weiterhin in Umfangsrichtung derart äquidistant beabstandet angeordnet, dass sich jeweils zwei kreissektorförmige Abschnitte 40, 42, 44, 46 mit einem Spulenpaar 10, 12 bzw. 14, 16 bzw. 18, 20 überdecken können. Den axialen Abstand in Richtung der Drehachse 2 gesehen zwischen dem plattenförmigen Beeinflussungselement 22 und der in einer und hierzu parallelen Ebene angeordneten Stirnflächen der Spulen 10, 12 bzw. 14, 16 bzw. 18, 20 legt der Fachmann derart fest, dass das Beeinflussungselement 22 vom Magnetfeld der Spulen 10, 12 bzw. 14, 16 bzw. 18, 20 durchdrungen werden kann.

Die jeweils miteinander zu einem Spulenpaar elektrisch zusammen geschalteten Spulen 10, 12 bzw. 14, 16 bzw. 18, 20 sind in Fig.2 schematisch durch gepunktete, gestrichelte und strichpunktierte Linien kenntlich gemacht. Die identischen Zentriwinkel $\alpha$ der kreissektorförmigen Spulen 10, 12 bzw. 14, 16 bzw. 18, 20 und der kreissektorförmigen Abschnitte 40, 42, 44, 46 des Rotors 6 betragen beispielsweise $\pi/4$, die Periodizität der kreissektorförmigen Abschnitte 40, 42, 44, 46 des Rotors 6 beispielsweise $2\pi/n_R$, wobei R die Anzahl der Abschnitte 40, 42, 44, 46 ist. Besonders bevorzugt ist die Anzahl der Spulen 10, 12 bzw. 14, 16 bzw. 18, 20 eine gerade, durch drei teilbare Zahl.

Vor diesem Hintergrund ist die Funktionsweise des Positionssensors 4 wie folgt: Durch eine mittels einer Betätigung des Fahrpedals initiierte Drehung des Beeinflussungselements 22 um die Drehachse 2, beispielsweise in Fig.2 in Richtung des Pfeils 66 gegen den Uhrzeigersinn, ergibt sich ein jeweils unterschiedlicher Überdeckungsgrad $\mu$ der kreissektorförmigen Abschnitte 40, 42, 44, 46 des Beeinflussungselements 22 in Bezug zu den jeweiligen Spulen 10, 12 bzw. 14, 16 bzw. 18, 20 wobei sich der Überdeckungsgrad $\mu$ von 0 (keine Überdeckung), beispielsweise in Fig.2 das Spulenpaar 10, 12 mit der gestrichelten Umrandung, bis zum Überdeckungsgrad 1 (vollständige Überdeckung) erstreckt. Eine vollständige Überdeckung wenigstens einer der Spulen 10, 12 bzw. 14, 16 bzw. 18, 20 durch die Abschnitte 40, 42, 44, 46 des Beeinflussungselements 22 ist möglich, weil die Zentriwinkel $\alpha$ der kreissektorförmigen Spulen 10, 12 bzw. 14, 16 bzw. 18, 20 mit den Zentriwinkeln $\alpha$ der kreissektorförmigen Abschnitte 40, 42, 44, 46 vorzugsweise identisch sind und entsprechende Drehlagen existieren.

Je nach dem Überdeckungsgrad $\mu$ durch das Beeinflussungselement 22 erzeugen die Spulenpaare 10, 12 bzw. 14, 16 bzw. 18, 20 folglich separate Ausgangssignale in Form einer Frequenzänderung. In Fig.4 ist für den Positionssensor 4 von Fig.2 das Kennlinienfeld dargestellt sind, wo der Überdeckungsgrad $\mu$ über dem Drehwinkel $\beta$ für jedes Spulenpaar 10, 12 bzw. 14, 16 bzw. 18, 20 angetragen ist. Die Kennlinien in gepunkteter, gestrichelter und strichpunktierter Linie in Fig.4 beziehen sich auf die analog gezeichneten Spulenpaare 10, 12 bzw. 14, 16 bzw. 18, 20 in Fig.2. Es ergeben sich für jedes Spulen- oder Sektorpaar 10, 12 bzw. 14, 16 bzw. 18, 20 jeweils periodische und lineare Verläufe, welche sich jeweils zickzackförmig von 0 (keine Überdeckung) bis 1 (vollständige Überdeckung) erstrecken. Jedem Überdeckungsgrad $\mu$ entspricht dann eine Eigenfrequenz des jeweiligen Schwingkreises.

Alternativ lassen sich die Geometrien der Spulen 10, 12 bzw. 14, 16 bzw. 18, 20 und des Beeinflussungselements 22 so gestalten, dass sich statt einer linearen Kennlinie jeweils ein Sinus- und Kosinussignal in Abhängigkeit vom Drehwinkel $\beta$ einstellt. Dies ist beispielsweise bei vier Spulen mit einem Umfangsabstand von 90 Grad der Fall (siehe Ausführung gemäß Fig.9). Für die Auswertung wird dann vorzugsweise der Tangens beispielsweise aus dem Sinussignal $\sin(\beta)$ des einen Spulenpaares 10, 12 bzw. 14, 16 bzw. 18, 20 und dem Kosinussignal $\cos(\beta)$ des anderen Spulenpaares 10, 12 bzw. 14, 16 bzw. 18, 20 herangezogen:

$$\tan(\beta) = A\sin(\beta)/A\cos(\beta) \qquad (1)$$

wobei A die Signalamplitude ist, welche aus Gleichung (1) herausgekürzt werden kann, so dass die Versorgungsspannung, welche proportional zur Signalamplitude ist, in vorteilhafter Weise keinen Einfluss auf das Messergebnis hat.

Für den Arcustangens des Drehwinkels $\beta$ gilt dann :

$$\arctan(\beta) = \arctan(\sin(\beta)/\cos(\beta)) \qquad (2)$$

oder:

$$\beta = \arctan(\sin(\beta)/\cos(\beta)) \qquad (3)$$

Für jeden beliebigen Winkelwert $\beta$, der in Fig.4 beispielsweise durch eine senkrechte Linie gekennzeichnet ist, erhält man einen Punkt 68 auf einer Kennlinie eines Spulenpaares 10, 12 bzw. 14, 16 bzw. 18, 20, wobei in diesem Punkt 68, nach Abzug eines offsets, die Summe der Überdeckungsgradwerte der Kennlinien gleich Null ergibt oder innerhalb eines die Null beinhaltenden Toleranzbandes liegen muss. Falls daher diese Bedingung nicht erfüllt wird, was vorzugsweise durch entsprechende Kontrollroutinen oder Prüfkriterien der Auswerteeinrichtung 24 überprüft wird, so ist dies ein Hinweis darauf, dass eine fehlerhafte Messung und unter Umständen ein Defekt des Positionssensors 4 bzw. des betreffenden Schwingkreises oder Oszillators vorliegt. Dann kann entweder ein Notlaufprogramm gestartet oder der Positionssensor 4 außer Betrieb gesetzt werden.

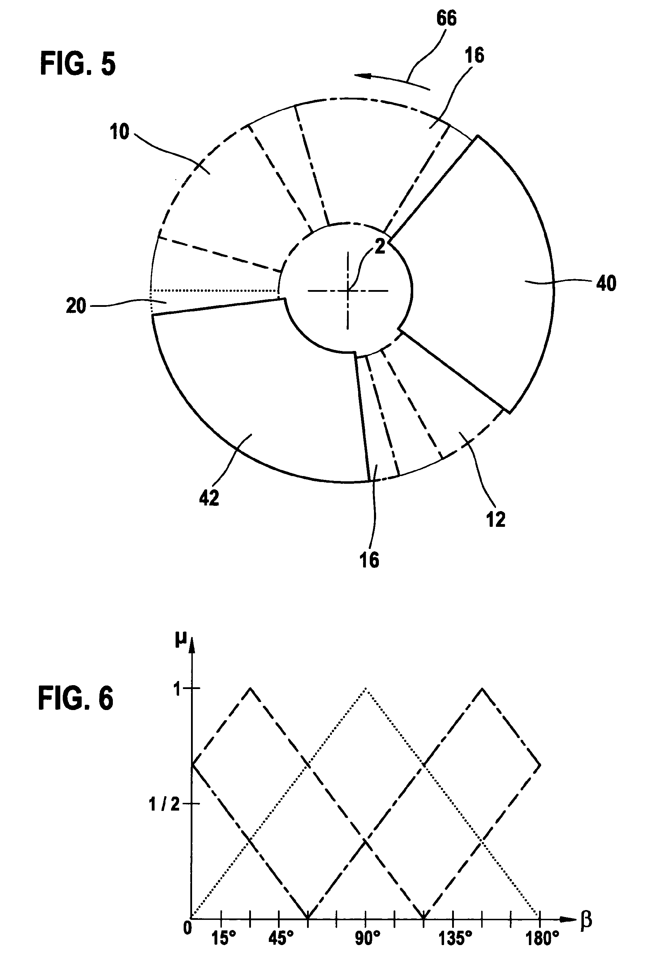

In Fig.5 ist eine weitere Ausführungsform eines Positionssensors 4 gezeigt, wobei gleich wirkende Baugruppen und Bauteile mit den gleichen Bezugszahlen versehen sind wie beim Ausführungsbeispiel von Fig.2. Zwar sind bei der Ausführungsform von Fig.5 ebenfalls sechs Spulen 10, 12 bzw. 14, 16 bzw. 18, 20 in Form von drei Spulenpaaren vorhanden, jedoch beinhaltet das Beeinflussungselement 22 nur zwei sektorförmige Abschnitte 40, 42, wobei der Zentriwinkel $\alpha$ der beiden kreissektorförmigen Abschnitte 40, 42 neunzig Grad beträgt, während die Zentriwinkel $\alpha$ der Spulen 10, 12 bzw. 14, 16 bzw. 18, 20 nach wie vor $\pi/4$ betragen. Der Umfangsabstand der beiden Abschnitte 40, 42 beträgt 45 Grad. Die betreffenden Kennlinien dieser Ausführungsform sind in Fig.6 gezeigt.

Diese Maßnahmen haben den Vorteil, dass ein Verkippen des Rotors 6 oder des Stators 8 des Positionssensors 4 in eine von einer parallelen Lage abweichenden Lage eine Signalveränderung in der einen Spule 10, 12, 14, 16, 18, 20 eines Spulenpaars 10, 12 bzw. 14, 16 bzw. 18, 20 auslöst, welche durch die Signalveränderung in der anderen Spule 10, 12, 14, 16, 18, 20 des betreffenden Spulenpaars 10, 12 bzw. 14, 16 bzw. 18, 20 kompensiert wird, so dass ein solches Verkippen keine Auswirkungen auf das Messergebnis hat.

Wie bereits oben ausgeführt, bildet bei dem bevorzugten Ausführungsbeispiel jede Spule 10, 12, 14, 16, 18, 20 zusammen mit einem dem diese Spule beinhaltenden Spulenpaar 10, 12 bzw. 14, 16 bzw. 18, 20 zugeordneten Kondensator und gegebenenfalls weiteren passiven oder aktiven elektronischen Bauelementen wie beispielsweise jeweils einem Zähler und/oder einem Verstärker einen Schwingkreis oder Oszillator aus. Alternativ können auch weniger oder mehr als sechs Spulen vorgesehen sein, wenigstens aber vier Spulen.

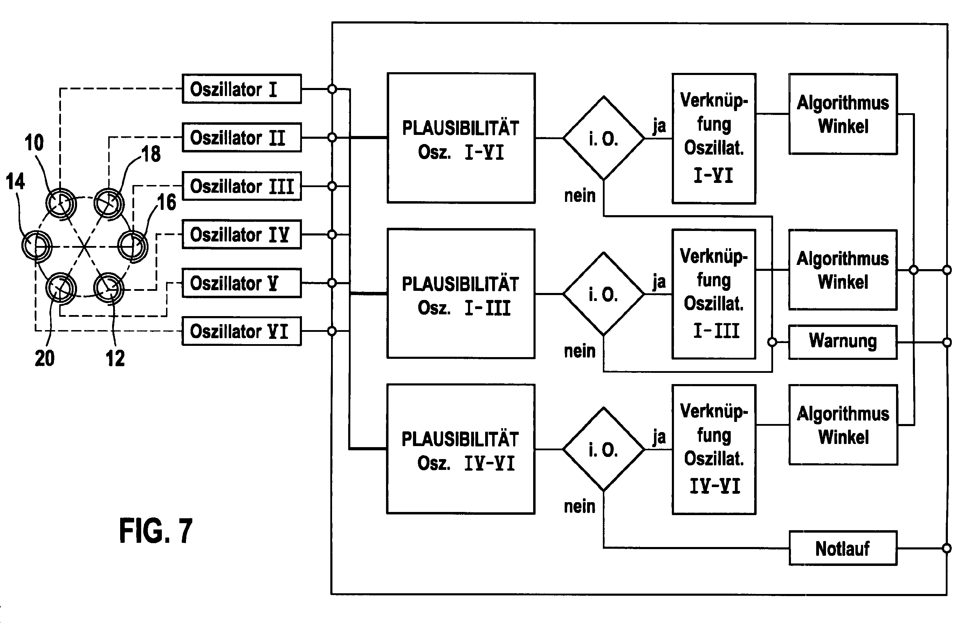

Bei der in Fig.7 gezeigten Ausführungsform sind wie bei der Ausführungsform von Fig.1 von den sechs dort vorhandenen Spulen 10, 12, 14, 16, 18, 20 wiederum jeweils zwei Spulen 10, 12 bzw. 14, 16 bzw. 18, 20 miteinander elektrisch gekoppelt und bilden jeweils ein ein separates Ausgangssignal für die Auswerteeinrichtung 24 lieferndes Spulenpaar, wobei die Spulen 10, 12, 14, 16, 18, 20 eines Spulenpaares 10, 12 bzw. 14, 16 bzw. 18, 20 in Bezug auf die Drehachse 2 diametral gegenüberliegend angeordnet sind. Diese Kopplung von jeweils zwei Spulen 10, 12 bzw. 14, 16 bzw. 18, 20 zu einem Spulenpaar dient zur Kompensation von Kipp- und Achsfehlern, wie oben erläutert wurde.

Für die Zwecke der Überwachung und Überprüfung bzw. des Vorsehens von Redundanzen werden jedoch vorzugsweise die Signale jeder einzelnen der sechs Spulen 10, 12, 14, 16, 18 ausgewertet. Dabei bildet jede der sechs Spulen 10, 12, 14, 16, 18, 20 zusammen mit wenigstens einem Kondensator und gegebenenfalls weiteren elektrischen Bauelementen wie einem Verstärker und/oder einem Zähler einen eigenen Schwingkreis oder Oszillator aus, so dass insgesamt beispielsweise sechs Oszillatoren I, II, III, IV, V und VI vorhanden sind.

Um die sechs Oszillatoren I bis VI hinsichtlich Ihrer Funktionstüchtigkeit zu überprüfen und um eine Strategie anzugeben, wie mit gestörten Oszillatoren bzw. deren Ausgangssignalen zu verfahren ist, werden die folgenden Verfahrensschritte innerhalb einer oder mehrerer Routinen der Auswerteeinrichtung 24 durchlaufen:

a) Überprüfen der von den Oszillatoren ausgesteuerten Ausgangssignale anhand wenigstens eines Prüfkriteriums, und

b) falls die Ausgangssignale aller Oszillatoren I bis VI das wenigstens eine Prüfkriterium erfüllen, dann Ermitteln der relativen Position zwischen dem Rotor 6 und dem Stator 8 auf der Basis des Ausgangssignals wenigstens eines Oszillators I bis VI, oder

c) falls wenigstens einer der Oszillatoren I bis VI ein Ausgangssignal aussteuert, welches das wenigstens eine Prüfkriterium nicht erfüllt, dann Bilden von wenigstens zwei Gruppen I bis III bzw. IV bis VI von Oszillatoren aus der Gesamtheit von Oszillatoren I bis VI, wobei keiner der Oszillatoren gleichzeitig Mitglied in mehreren Gruppen von Oszillatoren ist, und

c1) falls das Ausgangssignal wenigstens eines Oszillators wenigstens einer Gruppe I bis III bzw. IV bis VI von Oszillatoren das wenigstens eine Prüfkriterium nicht erfüllt und die Ausgangssignale aller Oszillatoren wenigstens einer weiteren Gruppe I bis III bzw. IV bis VI von Oszillatoren das wenigstens eine Prüfkriterium allesamt erfüllen, dann Ermitteln der relativen Position zwischen dem Rotor 6 und dem Stator 8 auf der Basis des Ausgangssignals wenigstens eines Oszillators der wenigstens einen weiteren Gruppe I bis III bzw. IV bis VI von Oszillatoren, oder

c2) falls in jeder Gruppe I bis III bzw. IV bis VI von Oszillatoren wenigstens ein Oszillator vorhanden ist, dessen Ausgangssignal das wenigstens eine Prüfkriterium nicht erfüllt, dann

Aussteuern eines Störungssignals, hier vorzugsweise eines Notlaufsignals zum Auslösen einer Notlauffunktion des Motorsteuergeräts.

Falls daher die Ausgangssignale alle sechs Oszillatoren I bis VI das wenigstens eine Prüfkriterium erfüllen, welches bevorzugt ein Plausibilitätskriterium ist, bei welchem geprüft wird, ob das betreffende Ausgangssignal innerhalb eines vorgegebenen Toleranzbereichs liegt, dann wird der in Fig.7 oben dargestellte Pfad durchlaufen. Das Prüfungskriterium ist in Fig.7 durch das Rautensymbol "i.O." als Abkürzung für die Abfrage "in Ordnung ?" gekennzeichnet. Dann werden vorzugsweise alle sechs Ausgangssignale der sechs Oszillatoren I bis VI miteinander verknüpft und der Drehwinkel des Rotors 6 gegenüber dem Stator 8 anhand eines Algorithmus berechnet. Ausreichend wäre jedoch auch nur ein Ausgangssignal eines Oszillators I bis VI, um den Drehwinkel zu berechnen, weil alle Oszillatoren I bis VI intakt sind.

Falls jedoch wenigstens einer der Oszillatoren I bis VI ein Ausgangssignal aussteuert, welches das wenigstens eine Prüfkriterium nicht erfüllt, dann werden gemäß des bevorzugten Ausführungsbeispiels zwei Gruppen von Oszillatoren gebildet, nämlich beispielsweise eine Gruppe mit den Oszillatoren I bis III und eine weitere Gruppe mit den Oszillatoren IV bis VI. Dies entspricht dem mittleren Pfad und dem unteren Pfad von Fig.7. Weiterhin wird ein optisches und/oder ein akustisches Warnsignal an eine Warneinrichtung ausgesteuert, die der Fahrer des Kraftfahrzeugs wahrnehmen kann. Wird der Messwert des Positionssensors 4 als analoges Signal erzeugt, so wird im Fehlerfall der Fehler durch eine digitale Werteänderung an einem Ausgang der Auswerteeinrichtung 24 ausgesteuert und beispielsweise an die Warneinrichtung weiter gesteuert.

Falls das Ausgangssignal wenigstens eines Oszillators der einen Gruppe I bis III bzw. IV bis VI das wenigstens eine Prüfkriterium nicht erfüllt und die Ausgangssignale aller Oszillatoren der jeweils anderen Gruppe I bis III bzw. IV bis VI das wenigstens eine Prüfkriterium allesamt erfüllen, dann wird die relative Position bzw. der Drehwinkel zwischen dem Rotor 6 und dem Stator 8 auf der Basis des Ausgangssignale wenigstens eines Oszillators der anderen Gruppe 1 bis III bzw. IV bis VI berechnet. Vorzugsweise werden die Ausgangssignale aller Oszillatoren 1 bis III bzw. IV bis VI dieser anderen Gruppe, welche ja funktionstüchtig sind, miteinander verknüpft und hieraus der Messwert mit Hilfe eines Algorithmus berechnet.

Falls alternativ in beiden Gruppen I bis III bzw. IV bis VI jeweils wenigstens ein Oszillator vorhanden ist, dessen Ausgangssignal das wenigstens eine Prüfkriterium nicht erfüllt, dann wird ein Störungssignal ausgesteuert, hier vorzugsweise ein Notlaufsignal zum Auslösen einer Notlauffunktion beispielsweise des Motorsteuergeräts. Die Auswerteeinrichtung 24 ist anhand einer entsprechenden Programmierung ausgebildet, um das voranstehend beschriebene Verfahren ausführen zu können.

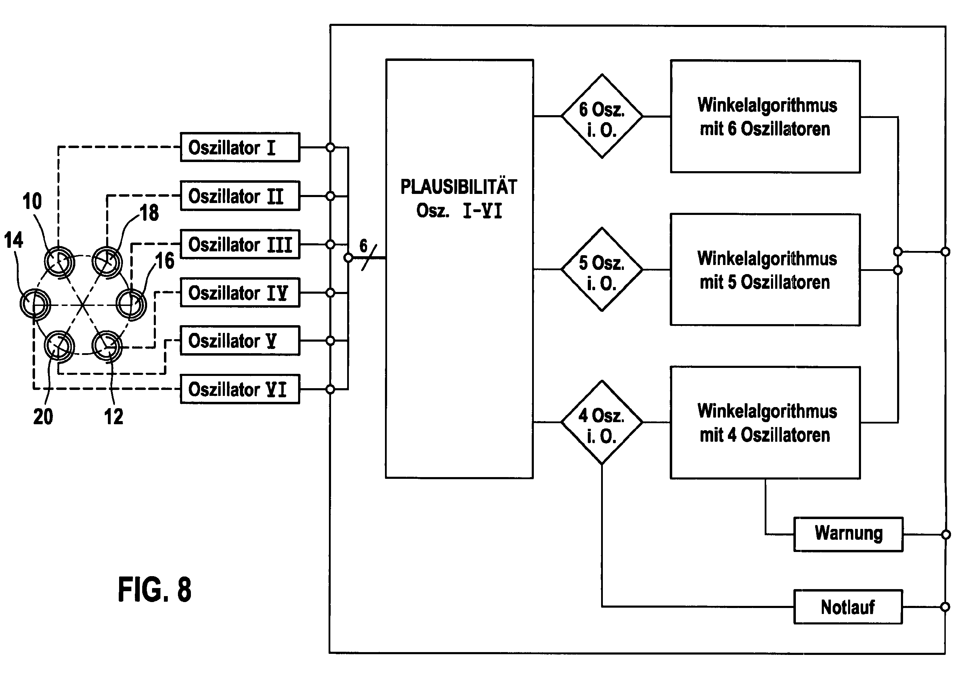

In Fig.8 ist eine weitere Variante des Verfahrens zur Überwachung und Überprüfung einer Messeinrichtung 1 mit wenigstens sechs Oszillatoren I bis VI gezeigt, wie sie im Aufbau und der Funktionsweise den Figuren 1 bis 6 entspricht. Das Verfahren beinhaltet wenigstens die folgenden Schritte:

a) Überprüfen der von den Oszillatoren I bis VI ausgesteuerten Ausgangssignale anhand wenigstens eines Prüfkriteriums, und

b) falls die Ausgangssignale aller Oszillatoren I bis VI das wenigstens eine Prüfkriterium erfüllen, dann Ermitteln der relativen Position zwischen dem Rotor 6 und dem Stator 8 auf der Basis der Ausgangssignale wenigstens eines Oszillators, vorzugsweise aller Oszillatoren I bis VI, oder

c) falls einer der Oszillatoren I bis VI Ausgangssignale aussteuert, welche das wenigstens eine Prüfkriterium nicht erfüllen, dann Ermitteln der relativen Position zwischen dem Rotor 6 und Stator 8 auf der Basis der Ausgangssignale wenigstens eines Oszillators der verbleibenden Oszillatoren, vorzugsweise auf der Basis der Ausgangsignale aller verbleibenden Oszillatoren, oder

d) falls zwei der Oszillatoren I bis VI Ausgangssignale aussteuern, welche jeweils das wenigstens eine Prüfkriterium nicht erfüllen, dann Ermitteln der relativen Position zwischen dem Rotor 6 und Stator 8 auf der Basis der Ausgangssignale wenigstens eines Oszillators der verbleibenden Oszillatoren, vorzugsweise auf der Basis der Ausgangsignale aller verbleibenden Oszillatoren, oder

e) falls mehr als zwei der Oszillatoren I bis VI Ausgangssignale aussteuern, welche jeweils das wenigstens eine Prüfkriterium nicht erfüllen, dann Erzeugen eines Störungssignals.

Unter einem verbleibenden Oszillator wird daher ein Oszillator verstanden, dessen Ausgangssignale das wenigstens eine Prüfkriterium erfüllt.

Das Störungssignal gemäß Schritt e) ist auch hier wiederum ein Notlaufsignal zum Auslösen einer Notlauffunktion beispielsweise des Motorsteuergeräts. Weiterhin kann gemäß Schritt d) zusätzlich ein optisches und/oder ein akustisches Warnsignal über den Ausfall von zwei Oszillatoren an eine Warneinrichtung ausgesteuert werden, die der Fahrer des Kraftfahrzeugs wahrnehmen kann. Bei beiden Varianten gemäß Fig.7 und Fig.8 können das Warnsignal und/oder das Notlaufsignal über eine oder mehrere separate Leitungen in die Warneinrichtung, einen nicht flüchtigen Speicher und/oder in das betreffende Steuergerät, insbesondere in das Motorsteuergerät eingesteuert werden. Die Auswerteeinrichtung 24 ist jeweils anhand einer entsprechenden Programmierung ausgebildet, um die oben beschriebenen Verfahrensschritte auszuführen.

Anstatt die Induktivität der Spulen 10, 12, 14, 16 und 18 durch das Beeinflussungselement 22 zu beeinflussen, um eine Änderung der Eigenfrequenz des betreffenden Schwingkreises bzw. Oszillators I bis VI hervorzurufen, könnte auch die Kapazität der in den Oszillatoren vorhandenen Kapazitäten bzw. Kondensatoren durch das Beeinflussungselement verändert werden, um die Eigenfrequenz des betreffenden Schwingkreises zu beeinflussen. Denkbar ist der Einsatz der Erfindung daher auch bei kapazitiven, induktiven, auf Wirbelströmen basierenden oder auf ferromagnetischen Änderungen basierenden Sensoren. Nicht zuletzt ist das erfindungsgemäße Verfahren bzw. die erfindungsgemäße Messeinrichtung 1 nicht auf Drehwinkelgeber beschränkt, sondern es kann auch auf lineare Sensoren übertragen werden.

## Patentansprüche

1. Verfahren zur Überwachung und Überprüfung einer Messeinrichtung (1) zur berührungslosen Erfassung der relativen Position zwischen einem ersten Element (6) und einem zweiten Element (8) mit Hilfe eines Positionssensors (4), der wenigstens vier, mit dem ersten Element (6) oder mit dem zweiten Element (8) verbundene Oszillatoren (I bis VI) sowie wenigstens ein Ausgangssignale der Oszillatoren (I bis VI) beeinflussendes, mit dem zweiten Element (8) oder mit dem ersten Element (6) verbundenes Beeinflussungselement (22) aufweist, beinhaltend folgende Schritte:

   a) Überprüfen der von den Oszillatoren (I bis VI) ausgesteuerten Ausgangssignale anhand wenigstens eines Prüfkriteriums, und
   b) falls die Ausgangssignale aller Oszillatoren (I bis VI) das wenigstens eine Prüfkriterium erfüllen, dann Ermitteln der relativen Position zwischen dem ersten Element (6) und dem zweiten Element (8) auf der Basis des Ausgangssignals wenigstens eines Oszillators (I bis VI), oder
   c) falls wenigstens einer der Oszillatoren (I bis VI) Ausgangssignale aussteuert, welche das wenigstens eine Prüfkriterium nicht erfüllen, dann Bilden von wenigstens zwei Gruppen (I bis III, IV bis VI) von Oszillatoren aus der Gesamtheit von Oszillatoren (I bis VI), wobei keiner der Oszillatoren (I bis VI) gleichzeitig Mitglied in mehreren Gruppen (I bis III, IV bis VI) von Oszillatoren ist, und
   c1) falls das Ausgangssignal wenigstens eines Oszillators wenigstens einer Gruppe (I bis III, IV bis VI) von Oszillatoren das wenigstens eine Prüfkriterium nicht erfüllt und die Ausgangssignale aller Oszillatoren wenigstens einer weiteren Gruppe (I bis III, IV bis VI) von Oszillatoren das wenigstens eine Prüfkriterium allesamt erfüllen, dann Ermitteln der relativen Position zwischen dem ersten Element (6) und dem zweiten Element (8) auf der Basis der Ausgangssignale wenigstens eines Oszillators der wenigstens einen weiteren Gruppe (I bis III, IV bis VI) von Oszillatoren, oder
   c2) falls in jeder Gruppe (I bis III, IV bis VI) von Oszillatoren wenigstens ein Oszillator vorhanden ist, dessen Ausgangssignale das wenigstens eine Prüfkriterium nicht erfüllen, dann Aussteuern eines Störungssignals.

2. Verfahren nach Anspruch 1 , wobei die Ausgangssignale eines Oszillators (I bis VI) abhängig vom Winkel oder einer linearen Position des ersten Elements (6) relativ zum zweiten Element (8) gebildet werden.

3. Verfahren nach einem der vorhergehenden Ansprüche, wobei das Störungssignal ein an ein Steuergerät ausgesteuertes Notlaufsignal ist.

4. Verfahren nach einem der vorhergehenden Ansprüche, wobei gemäß Schritt c1) von Anspruch 1 zusätzlich ein Warnsignal erzeugt wird.

5. Verfahren nach einem der vorhergehenden Ansprüche, wobei das Prüfkriterium ein Plausibilitätskriterium ist, bei welchem geprüft wird, ob die Ausgangssignale eines Oszillators (I bis VI) innerhalb eines vorgegebenen Toleranzbereichs liegen.

6. Verfahren nach einem der vorhergehenden Ansprüche, wobei die Ausgangssignale eines Oszillators (I bis VI) abhängig von einer Eigenfrequenz des Oszillators (I bis VI) gebildet werden, wobei die Lage des Beeinflussungselements (22) die Induktivität wenigstens einer Spule (10, 12, 14, 16, 18, 20) und/oder die Kapazität wenigstens eines Kondensators des Oszillators (I bis VI) beeinflusst.

7. Vorrichtung zur Überwachung und Überprüfung einer Messeinrichtung (1) zur berührungslosen Erfassung der relativen Position zwischen einem ersten Element (6) und einem zweiten Element (8) mit Hilfe eines Positionssensors (4), der wenigstens vier, mit dem ersten Element (6) oder mit dem zweiten Element (8) verbundene Oszillatoren (I bis VI) sowie ein an eine Auswerteeinrichtung (24) ausgesteuerte Ausgangssignale der Oszillatoren (I bis VI) beeinflussendes, mit dem zweiten Element (8) oder mit dem ersten Element (6) verbundenes Beeinflussungselement (22) aufweist, wobei die Auswerteeinrichtung (24) derart ausgebildet ist, dass sie

a) die von den Oszillatoren (I bis VI) ausgesteuerten Ausgangssignale anhand wenigstens eines Prüfkriteriums überprüft, und

b) falls die Ausgangssignale aller Oszillatoren (I bis VI) das wenigstens eine Prüfkriterium erfüllen, die relative Position zwischen dem ersten Element (6) und dem zweiten Element (8) auf der Basis der Ausgangssignale wenigstens eines Oszillators (I bis VI) ermittelt, oder

c) falls wenigstens einer der Oszillatoren (I bis VI) Ausgangssignale aussteuert, welche das wenigstens eine Prüfkriterium nicht erfüllt, wenigstens zwei Gruppen (I bis III, IV bis VI) von Oszillatoren aus der Gesamtheit von Oszillatoren (I bis VI) bildet, wobei keiner der Oszillatoren (I bis VI) gleichzeitig Mitglied in mehreren Gruppen (I bis III, IV bis VI) von Oszillatoren ist, und

c1) falls die Ausgangssignale wenigstens eines Oszillators wenigstens einer Gruppe (I bis III, IV bis VI) von Oszillatoren das wenigstens eine Prüfkriterium nicht erfüllen und die Ausgangssignale aller Oszillatoren wenigstens einer weiteren Gruppe (I bis III, IV bis VI) von Oszillatoren das wenigstens eine Prüfkriterium allesamt erfüllen, die relative Position zwischen dem ersten Element (6) und dem zweiten Element (8) auf der Basis der Ausgangssignale wenigstens eines Oszillators der wenigstens einen weiteren Gruppe (I bis III, IV bis VI) von Oszillatoren ermittelt, oder

c2) falls in jeder Gruppe (I bis III, IV bis VI) von Oszillatoren wenigstens ein Oszillator vorhanden ist, dessen Ausgangssignale das wenigstens eine Prüfkriterium nicht erfüllen, ein Störungssignal aussteuert.

8. Vorrichtung nach Anspruch 7 wobei das erste Element (6) und das zweite Element (8) einer Stelleinrichtung eines Kraftfahrzeugs wie einem Gaspedal oder einer Drosselklappe zugeordnet sind.

9. Vorrichtung nach einem der Ansprüche 7 bis 8, wobei wenigstens vier Oszillatoren (I bis VI) mit je wenigstens einer Induktivität und je wenigstens einem Kondensator in einem Schwingkreis vorgesehen sind.

10. Vorrichtung nach einem der Ansprüche 7 bis 9, wobei sie zur berührungslosen Erfassung der relativen Drehposition zwischen einem Rotor (6) und einem Stator (8) in Bezug auf eine Drehachse (2) vorgesehen ist.

11. Vorrichtung nach Anspruch 10, wobei der Positionssensor (4) einen Rotor (6) und einen Stator (8) sowie das die Induktivität wenigstens einer mit dem Rotor (6) oder dem Stator (8) verbundenen Spule (10, 12, 14, 16, 18, 20) beeinflussenden, mit dem Stator (8) oder dem Rotor (6) verbundene Beeinflussungselement (22) beinhaltet, wobei eine gerade Anzahl von wenigstens vier, mit Spulenachsen (10a, 12a, 14a) parallel zur Drehachse (2) kreisförmig um die Drehachse (2) angeordneten Spulen (10, 12, 14, 16, 18, 20) vorgesehen ist, von welchen jeweils zwei Spulen (10, 12 bzw. 14, 16 bzw. 18, 20) miteinander elektrisch gekoppelt sind und jeweils ein ein separates Ausgangssignal für die Auswerteeinrichtung (24) lieferndes Spulenpaar bilden, wobei die Spulen (10, 12 bzw. 14, 16 bzw. 18, 20) eines Spulenpaares in Bezug auf die Drehachse (2) diametral gegenüberliegend angeordnet sind.

12. Vorrichtung nach wenigstens einem der Ansprüche 7 bis 11, wobei das Beeinflussungselement (22) wenigstens teilweise aus einem paramagnetischen und/oder aus einem diamagnetischen Material gefertigt ist.

## Claims

1. Method for monitoring and checking a measuring device (1) for contactlessly detecting the relative position between a first element (6) and a second element (8) with the aid of a position sensor (4) having at least four oscillators (I to VI) which are connected to the first element (6) or to the second element (8), and at least one influencing element (22) which influences output signals from the oscillators (I to VI) and is connected to the second element (8) or to the first element (6), comprising the following steps:

a) the output signals output by the oscillators (I to VI) are checked using at least one test criterion, and

b) if the output signals from all oscillators (I to VI) satisfy the at least one test criterion, the relative position between the first element (6) and the second element (8) is determined on the basis of the output signal from at least one oscillator (I to VI), or

c) if at least one of the oscillators (I to VI) outputs output signals which do not satisfy the at least one test criterion, at least two groups (I to III, IV to VI) of oscillators are formed from all oscillators (I to VI), in which case none of the oscillators (I to VI) is simultaneously a member of a plurality of groups (I to III, IV to VI) of oscillators, and

c1) if the output signal from at least one oscillator in at least one group (I to III, IV to VI) of oscillators does not satisfy the at least one test criterion and the output signals from all oscillators in at least one further group (I to III, IV to VI) of oscillators all satisfy the at least one test criterion, the relative position between the first element (6) and the second element (8) is determined on the basis of the output signals from at least one oscillator in the at least one further group (I to III, IV to VI) of oscillators, or

c2) if each group (I to III, IV to VI) of oscillators contains at least one oscillator whose output signals do not satisfy the at least one test criterion, a fault signal is output.

2. Method according to Claim 1, the output signals from an oscillator (I to VI) being formed on the basis of the angle or a linear position of the first element (6) relative to the second element (8).

3. Method according to one of the preceding claims, the fault signal being an emergency running signal output to a control device.

4. Method according to one of the preceding claims, a warning signal additionally being generated according to step c1) of Claim 1.

5. Method according to one of the preceding claims, the test criterion being a plausibility criterion in the case of which a check is carried out in order to determine whether the output signals from an oscillator (I to VI) are within a predefined tolerance range.

6. Method according to one of the preceding claims, the output signals from an oscillator (I to VI) being formed on the basis of a natural frequency of the oscillator (I to VI), the position of the influencing element (22) influencing the inductance of at least one coil (10, 12, 14, 16, 18, 20) and/or the capacitance of at least one capacitor of the oscillator (I to VI).

7. Apparatus for monitoring and checking a measuring device (1) for contactlessly detecting the relative position between a first element (6) and a second element (8) with the aid of a position sensor (4) having at least four oscillators (I to VI) which are connected to the first element (6) or to the second element (8), and an influencing element (22) which influences output signals from the oscillators (I to VI), which are output to an evaluation device (24), and is connected to the second element (8) or to the first element (6), the evaluation device (24) being designed in such a manner that it

a) checks the output signals output by the oscillators (I to VI) using at least one test criterion, and

b) if the output signals from all oscillators (I to VI) satisfy the at least one test criterion, determines the relative position between the first element (6) and the second element (8) on the basis of the output signals from at least one oscillator (I to VI), or

c) if at least one of the oscillators (I to VI) outputs output signals which do not satisfy the at least one test criterion, forms at least two groups (I to III, IV to VI) of oscillators from all oscillators (I to VI), in which case none of the oscillators (I to VI) is simultaneously a member of a plurality of groups (I to III, IV to VI) of oscillators, and

c1) if the output signals from at least one oscillator in at least one group (I to III, IV to VI) of oscillators do not satisfy the at least one test criterion and the output signals from all oscillators in at least one further group (I to III, IV to VI) of oscillators all satisfy the at least one test criterion, determines the relative position between the first element (6) and the second element (8) on the basis of the output signals from at least one oscillator in the at least one further group (I to III, IV to VI) of oscillators, or

c2) if each group (I to III, IV to VI) of oscillators contains at least one oscillator whose output signals do not satisfy the at least one test criterion, outputs a fault signal.

8. Apparatus according to Claim 7, the first element (6) and the second element (8) being assigned to an actuating device of a motor vehicle such as an accelerator or a throttle valve.

9. Apparatus according to either of Claims 7 and 8, at least four oscillators (I to VI) each with at least one inductance and each- with at least one capacitor being provided in a resonant circuit.

10. Apparatus according to one of Claims 7 to 9, the apparatus being provided for the purpose of contactlessly detecting the relative rotational position between a rotor (6) and a stator (8) with respect to an axis of rotation (2).

11. Apparatus according to Claim 10, the position sensor (4) comprising a rotor (6) and a stator (8) as well as the influencing element (22) which influences the inductance of at least one coil (10, 12, 14, 16, 18, 20) connected to the rotor (6) or to the stator (8) and is connected to the stator (8) or to the rotor (6), an even number of at least four coils (10, 12, 14, 16, 18, 20) which are arranged in a circular manner around the axis of rotation (2) with coil axes (10a, 12a, 14a) parallel to the axis of rotation (2) being provided, two coils (10, 12 or 14, 16 or 18, 20) of which are each electrically coupled to one another and each form a coil pair which provides a separate output signal for the evaluation device (24), the coils (10, 12 or 14, 16 or 18, 20) in a coil pair being arranged diametrically opposite with respect to the axis of rotation (2).

**12.** Apparatus according to at least one of Claims 7 to 11, the influencing element (22) being at least partially produced from a paramagnetic and/or a diamagnetic material.

## Revendications

**1.** Procédé de surveillance et de contrôle d'un dispositif de mesure (1) pour la détection sans contact de la position relative entre un premier élément (6) et un deuxième élément (8) à l'aide d'un détecteur de position (4), lequel présente au moins quatre oscillateurs (I à VI) reliés avec le premier élément (6) ou avec le deuxième élément (8) ainsi qu'au moins un élément d'influence (22) influençant les signaux de sortie des oscillateurs (I à VI) et relié avec le premier élément (6) ou avec le deuxième élément (8), comprenant les étapes suivantes :

a) contrôle des signaux de sortie délivrés par les oscillateurs (I à VI) à l'aide d'au moins un critère de contrôle, et
b) si les signaux de sortie de tous les oscillateurs (I à VI) remplissent l'au moins un critère de contrôle, alors détermination de la position relative entre le premier élément (6) et le deuxième élément (8) en se basant sur le signal de sortie d'au moins un oscillateur (I à VI), ou
c) si au moins l'un des oscillateurs (I à VI) délivre des signaux de sortie qui ne remplissent pas l'au moins un critère de contrôle, alors formation d'au moins deux groupes (I à III, IV à VI) d'oscillateurs à partir de l'ensemble des oscillateurs (I à VI), aucun des oscillateurs (I à VI) n'étant simultanément membre de plusieurs groupes (I à III, IV à VI) d'oscillateurs, et
c1) si le signal de sortie d'au moins un oscillateur d'au moins un groupe (I à III, IV à VI) d'oscillateurs ne remplit pas l'au moins un critère de contrôle et les signaux de sortie de tous les oscillateurs d'au moins un groupe (I à III, IV à VI) d'oscillateurs supplémentaire remplissent tous ensemble l'au moins un critère de contrôle, alors détermination de la position relative entre le premier élément (6) et le deuxième élément (8) en se basant sur les signaux de sortie d'au moins un oscillateur de l'au moins un groupe (I à III, IV à VI) d'oscillateurs supplémentaire, ou
c2) si, dans chaque groupe (I à III, IV à VI) d'oscillateurs, il existe au moins un oscillateur dont les signaux de sortie ne remplissent pas l'au moins un critère de contrôle, alors délivrance d'un signal de défaut.

**2.** Procédé selon la revendication 1, selon lequel les signaux de sortie d'un oscillateur (I à VI) sont formés en dépendance de l'angle ou d'une position linéaire du premier élément (6) par rapport au deuxième élément (8).

**3.** Procédé selon l'une des revendications précédentes, selon lequel le signal de défaut est un signal de fonctionnement de secours délivré à un contrôleur.

**4.** Procédé selon l'une des revendications précédentes, selon lequel, conformément à l'étape c1) de la revendication 1, un signal d'alerte est généré en plus.

**5.** Procédé selon l'une des revendications précédentes, selon lequel le critère de contrôle est un critère de plausibilité qui sert à contrôler si les signaux de sortie d'un oscillateur (I à VI) se trouvent à l'intérieur d'une plage de tolérances prédéfinie.

**6.** Procédé selon l'une des revendications précédentes, selon lequel les signaux de sortie d'un oscillateur (I à VI) sont formés en fonction d'une fréquence propre de l'oscillateur (I à VI), la position de l'élément d'influence (22) influençant l'inductance d'au moins une bobine (10, 12, 14, 16, 18, 20) et/ou la capacité d'au moins un condensateur de l'oscillateur (I à VI).

**7.** Système de surveillance et de contrôle d'un dispositif de mesure (1) pour la détection sans contact de la position relative entre un premier élément (6) et un deuxième élément (8) à l'aide d'un détecteur de position (4), lequel présente au moins quatre oscillateurs (I à VI) reliés avec le premier élément (6) ou avec le deuxième élément (8) ainsi qu'un élément d'influence (22) influençant les signaux de sortie des oscillateurs (I à VI), lesquels sont délivrés à un dispositif d'interprétation (24), et relié avec le premier élément (6) ou avec le deuxième élément (8), le dispositif d'interprétation (24) étant configuré de telle sorte qu'il

a) contrôle les signaux de sortie délivrés par les oscillateurs (I à VI) à l'aide d'au moins un critère de contrôle, et
b) si les signaux de sortie de tous les oscillateurs (I à VI) remplissent l'au moins un critère de contrôle, détermine la position relative entre le premier élément (6) et le deuxième élément (8) en se basant sur les signaux de sortie d'au moins un oscillateur (I à VI), ou
c) si au moins l'un des oscillateurs (I à VI) délivre des signaux de sortie qui ne remplissent pas l'au moins un critère de contrôle, forme au moins deux groupes (I à III, IV à VI) d'oscillateurs à partir de l'ensemble des oscillateurs (I à VI), aucun des oscillateurs (I à VI) n'étant simultanément membre de plusieurs groupes (I à III, IV à VI) d'oscillateurs, et
c1) si les signaux de sortie d'au moins un oscillateur d'au moins un groupe (I à III, IV à VI) d'oscillateurs ne remplissent pas l'au moins un critère de contrôle et les signaux de sortie de tous les oscillateurs d'au moins un groupe (I à III, IV à VI) d'oscillateurs supplémentaire remplissent tous ensemble l'au moins un critère de contrôle, détermine la position relative entre le premier élément (6) et le deuxième élément (8) en se basant sur les signaux de sortie d'au moins un oscillateur de l'au moins un groupe (I à III, IV à VI) d'oscillateurs supplémentaire, ou
c2) si, dans chaque groupe (I à III, IV à VI) d'oscillateurs, il existe au moins un oscillateur dont les signaux de sortie ne remplissent pas l'au moins un critère de contrôle, délivre un signal de défaut.

**8.** Système selon la revendication 7, avec lequel le premier élément (6) et le deuxième élément (8) sont associés à un dispositif de commande d'un véhicule automobile comme une pédale d'accélérateur ou un clapet d'étranglement.

**9.** Système selon l'une des revendications 7 à 8, avec lequel sont prévus au moins quatre oscillateurs (I à VI) comprenant chacun au moins une inductance et chacun au moins un condensateur dans un circuit oscillant.

**10.** Système selon l'une des revendications 7 à 9, celui-ci étant prévu pour la détection sans contact de la position de rotation relative entre un rotor (6) et un stator (8) en référence à un axe de rotation (2).

**11.** Système selon la revendication 10, avec lequel le détecteur de position (4) comporte un rotor (6) et un stator (8) ainsi que l'élément d'influence (22), relié avec le rotor (6) ou le stator (8), influençant l'inductance d'au moins une bobine (10, 12, 14, 16, 18, 20) reliée avec le rotor (6) ou le stator (8), un nombre paire d'au moins quatre bobines (10, 12, 14, 16, 18, 20) disposées de manière circulaire autour de l'axe de rotation (2) dont les axes de bobine (10a, 12a, 14a) sont parallèles à l'axe de rotation (2) étant prévu, parmi lesquelles deux bobines (10, 12 ou 14, 16 ou 18, 20) sont respectivement connectées électriquement entre elles et forment respectivement une paire de bobines délivrant un signal de sortie séparé pour le dispositif d'interprétation (24), les bobines (10, 12 ou 14, 16 ou 18, 20) d'une paire de bobines étant disposées de manière diamétralement opposée en référence à l'axe de rotation (2).

**12.** Système selon au moins l'une des revendications 7 à 11, avec lequel l'élément d'influence (22) est fabriqué au moins partiellement à partir d'un matériau paramagnétique et/ou à partir d'un matériau diamagnétique.

**FIG. 1**

**FIG. 3**

**FIG. 2**

**FIG. 4**

**FIG. 5**

**FIG. 6**

FIG. 7

Oszillator I

Oszillator II

Oszillator III

Oszillator IV

Oszillator V

Oszillator VI

10  18
14  16
20  12

PLAUSIBILITÄT
Osz. I-VI

PLAUSIBILITÄT
Osz. I-III

PLAUSIBILITÄT
Osz. IV-VI

i. O.  ja  nein

i. O.  ja  nein

i. O.  ja  nein

Verknüpfung
Oszillat.
I-VI

Verknüpfung
Oszillat.
I-III

Verknüpfung
Oszillat.
IV-VI

Algorithmus
Winkel

Algorithmus
Winkel

Algorithmus
Winkel

Warnung

Notlauf

EP 2 101 158 B1

FIG. 8

Oszillator I
Oszillator II
Oszillator III
Oszillator IV
Oszillator V
Oszillator VI

6/

PLAUSIBILITÄT
Osz. I-VI

6 Osz.
i. O.

5 Osz.
i. O.

4 Osz.
i. O.

Winkelalgorithmus
mit 6 Oszillatoren

Winkelalgorithmus
mit 5 Oszillatoren

Winkelalgorithmus
mit 4 Oszillatoren

Warnung

Notlauf

10
14
18
16
20
12

EP 2 101 158 B1

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10352351 A1